# EUROPEAN PATENT APPLICATION

(11) **EP 4 811 482 A1**
(43) Date of publication of application: **23.09.2026**
(21) Application number: 23958921.1
(22) Date of filing: 17.11.2023
(51) Int. Cl.: H01M 10/0566, H01G 11/58, H01M 4/36, H01M 10/052, H01M 10/058

(54) **ORGANIC ELECTROLYTE POWER STORAGE DEVICE AND METHOD FOR MANUFACTURING SAME**

(71) Applicant: Materials Innovation Tsukuba Incorporated, Tsukuba-shi, Ibaraki 305-0047 (JP)
(72) Inventor: ZHANG, Kun, Tsukuba-shi Ibaraki 305-0047 (JP); MATSUMOTO, Yu, Tsukuba-shi Ibaraki 305-0047 (JP); HATO, Yukinori, Tsukuba-shi Ibaraki 305-0047 (JP)
(74) Representative: Hasegawa, Kan
(86) International application number: PCT/JP2023/041511
(87) International publication number: WO 2025/104921

(57) **Abstract**

Provided are an organic electrolyte-based energy storage device smaller in size than conventional ones and having a high electrode filling factor, and a method for manufacturing the device.

As for an organic electrolyte-based energy storage device 10 having a plurality of electrodes 1 mutually laminated, a plurality of terminals 2 each electrically connected to each of the plurality of electrodes 1, and an exterior body 3 formed of an aluminum laminate film, the electrodes 1 are each provided with an effective portion 1a contributing to energy storage and a lead portion 1b to which the terminal 2 is connected, the lead portion 1b and the terminal 2 are welded in a width direction of the terminal 2, and a welded portion has a width of 0.15 mm to 0.8 mm. Also, an area So mm² of an upper surface of the exterior body 3, an area Se mm² of the effective portion 1a of the electrode 1, and a thickness T mm of the exterior body 3 satisfy Equations (I) to (III) below. $Se / So ≦ 0.2978 ln So - 1.2088$ $60 < So < 170$ $T ≦ 3.0$

## Description

### Technical Field

The present invention relates to an organic electrolyte-based energy storage device and method for manufacturing same.

### Background Art

With the prevalence of IoT (Internet of Things), attention to wearable devices has increased. In a wearable device, demands for power supply technology are especially high, and an energy storage device having a small size, light weight, and high energy density and being quickly rechargeable has been demanded. Examples of such an energy storage device include an organic electrolyte-based energy storage device such as, for example, a lithium ion battery, electric double layer capacitor, and lithium ion capacitor.

In the organic electrolyte-based energy storage device, in general, a plurality of electrodes are laminated, with an electrolyte solution interposed therebetween, in a sealed exterior body made of a laminate film, and a tab lead (tab terminal) for extracting electric power is connected to an end portion of each electrode. In the energy storage device configured as described above, when viewed in plan view, an area for connecting the tab lead and the electrode and an area for sealing the laminate film configuring the exterior body are present around an area of the electrode contributing to energy storage. While the area for sealing the laminate film is indispensable for sealing the cell, the area does not contribute to an improvement in energy density. Therefore, in view of decreasing the size and weight, the area is desirably decreased as much as possible in a range of ensuring safety.

Thus, a nonaqueous electrolyte secondary battery has been conventionally suggested in which a ratio between an area X of an electrode-group accommodating portion and a total area Y of a heat seal portion of the laminate film (X/Y) is set to be equal to or smaller than 1.8, thereby decreasing the size while suppressing exfoliation of a sealing portion (refer to Patent Literature 1). In the secondary battery described in Patent Literature 1, the width of the heat seal portion is preferably 2 mm to 10 mm.

### Citation List

### Patent Literature

Patent Literature 1: Japanese Unexamined Patent Application Publication No. 2005-063856

### Summary of Invention

### Technical Problem

In a terminal device to be attached to the body, such as a wearable device, the demand for decreasing the its size is heavy, and an energy storage device to be mounted on the terminal device is also desired to be further decreased in size. Specifically, it is demanded that the size of the entire energy storage device is suppressed to the order of 10 mm per side. On the other hand, since the wearable device is required to have high safety and high reliability, it is required, in view of ensuring safety, to take a wide area where the laminate film configuring the exterior body is fused for sealing to prevent exfoliation of the laminate film. Similarly, in view of ensuring safety, it is desirable to take a wide welding area between the electrode and the tab lead to prevent breaking of wire.

However, since heat sealing of the laminate film and welding of the tab lead require an area to some degree, if the size of the cell is decreased, this poses a problem in which the area contributing to energy storage is narrowed, thereby decreasing energy density. Specifically, a width on the order of 5 mm to 10 mm is normally required for heat sealing of the laminate film, and a width on the order of 3 mm to 5 mm is required for welding of the tab lead. For this reason, in the above-described conventional technique, it is difficult to further decrease the size of the entire energy storage device without decreasing energy density.

Thus, the present invention is to provide an organic electrolyte-based energy storage device smaller in size than conventional ones and having a high electrode filling factor, and a method for manufacturing the device.

### Solution to Problem

An organic electrolyte-based energy storage device according to the present invention has a plurality of electrodes mutually laminated, a plurality of terminals each electrically connected to each of the plurality of electrodes, and an exterior body formed of an aluminum laminate film. The electrodes are each provided with an effective portion contributing to energy storage and a lead portion to which the terminal is connected, the lead portion and the terminal are welded in a width direction of the terminal, and a welded portion has a width of 0.15 mm to 0.8 mm. In plan view, when an area of an upper surface of the exterior body is So mm², an area of the effective portion of the electrode is Se mm², and a thickness of the exterior body is T mm, Equations (I) to (III) below are satisfied:$Se / So ≦ 0.2978 ln So - 1.2088$
$60 < So < 170$
$T ≦ 3.0$

In the organic electrolyte-based energy storage device of the present invention, the lead portion and the terminal may be ultrasonically welded in the width direction of the terminal, and the welded portion may have a width of 0.15 mm to 0.8 mm.

Also, the plurality of electrodes may be configured of a cathode where the effective portion is coated with a cathode active material and a anode where the effective portion is coated with an anode active material, and the cathode active material and the anode active material may be an active material capable of absorbing and desorbing ions. In that case, as the cathode active material and the anode active material, a material including a composite material of graphene and carbon nanotube can be used.

Alternatively, the plurality of electrodes may be configured of a cathode where the effective portion is coated with a cathode active material and a anode where the effective portion is coated with an anode active material, the cathode active material may be an active material capable of absorbing and desorbing ions, and the anode active material may be an active material capable of occluding and discharging lithium ions and may be pre-doped with lithium ions in advance. In that case, as the cathode active material, a material including a composite material of graphene and carbon nanotube can also be used.

An organic electrolyte-based energy storage device manufacturing method according to the present invention has a step of mutually laminating a plurality of electrodes each including an effective portion contributing to energy storage and a lead portion to which a terminal is connected, a step of connecting the terminal to the plurality of electrodes, and a step of sealing, with an exterior body formed of an aluminum laminate film, the laminated electrodes to which the terminal is connected. In plan view, when an area of an upper surface of the exterior body is So mm², an area of the effective portion of the electrode is Se mm², and a thickness of the exterior body is T mm, an energy storage device satisfying Equations (I) to (III) above is obtained.

The step of connecting the terminal to the plurality of electrodes may use an ultrasonic welding apparatus including a retaining portion that retains a weld target, an anvil, and a horn to ultrasonically weld the electrodes and the terminal together in a width direction of the terminal so that the welded portion has a width of 0.15 mm to 0.8 mm.

### Advantageous Effects of Invention

According to the present invention, it is possible to achieve an organic electrolyte-based energy storage device of an ultra-small size with a high electrode filling factor.

### Brief Description of Drawings

[Figure 1] Figure 1 is a plan view depicting an example of structure of an organic electrolyte-based energy storage device of an embodiment of the present invention.
[Figure 2] Figure 2 is a perspective view depicting the inner structure of an energy storage device 10 depicted in Figure 1.
[Figure 3] Figure 3 is a flowchart depicting one example of an organic electrolyte-based energy storage device manufacturing method of an embodiment of the present invention.
[Figure 4] Figure 4 is a diagram schematically depicting a step of coating a metal foil with slurry and pressing.
[Figure 5] Figure 5 is a diagram schematically depicting a step of cutting out an electrode from the metal foil where an active material layer is formed.
[Figure 6] Figure 6 is a diagram schematically depicting a step of laminating electrodes.
[Figure 7] Figure 7 is a diagram schematically depicting an alignment method in the step of laminating electrodes.
[Figure 8] Figure 8 is a diagram schematically depicting a step of ultrasonically welding a terminal to a lead portion of the electrode.
[Figure 9] Figures 9A to 9C are diagrams schematically depicting an example of structure of a horn 43 of an ultrasonic welding apparatus 40, in which A is a front view, B is a bottom view, and C is a right side view.
[Figure 10] Figure 10 is a sectional view schematically depicting a step of folding back an aluminum laminate film after heat sealing.
[Figure 11] Figures 11A to 11C are sectional views depicting a method of processing an end portion of an exterior body in the energy storage device of embodiments of the present invention, in which A depicts folding once, B depicts folding twice, and C depicts folding back.

### Description of Embodiments

In the following, embodiments for implementing the present invention are described in detail. Note that the present invention is not limited to the embodiments described below.

### (Structure of Power Storage Device)

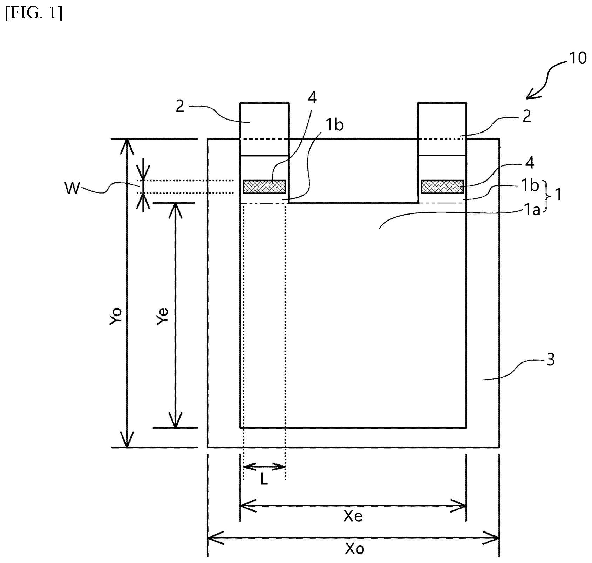

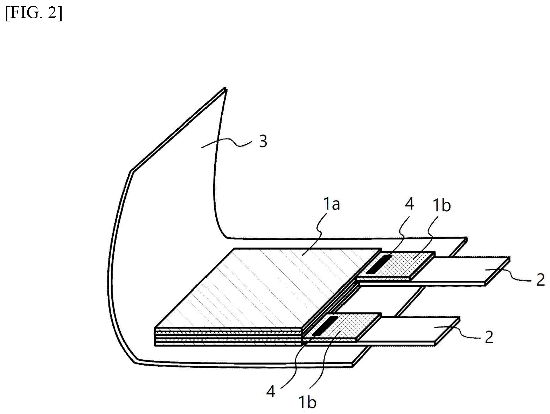

Figure 1 is a plan view depicting an example of structure of an organic electrolyte-based energy storage device (hereinafter also simply referred to as "energy storage device") of an embodiment of the present invention, and Figure 2 is a perspective view depicting the inner structure of an energy storage device 10 depicted in Figure 1. The energy storage device 10 of the present embodiment is an organic electrolyte-based energy storage device such as an electric double layer capacitor, lithium ion capacitor, and lithium ion battery and, as depicted in Figure 1 and Figure 2, has a plurality of electrodes 1, a plurality of terminals 2, and an exterior body 3.

### [Electrode 1]

In the energy storage device 10 of the present embodiment, the plurality of electrodes 1 are laminated via a separator or the like, and a space between the electrodes 1 is filled with an organic electrolyte solution. The electrodes 1 are each configured of a current collector formed of a metal foil or the like and an active material layer formed on this current collector. In addition, for example, an electrode (cathode) coated with a cathode active material on the current collector and an electrode (anode) coated with an anode active material on the current collector are alternately laminated.

When the energy storage device 10 of the present embodiment is an electric double layer capacitor, an active material capable of absorbing and desorbing ions can be used as the cathode active material and the anode active material configuring the electrodes 1. In that case, in view of improvement in energy density, the entire or part of the cathode active material and the anode active material is preferably a composite material of graphene and carbon nanotube.

Also, when the energy storage device 10 of the present embodiment is a lithium ion capacitor, an active material capable of absorbing and desorbing ions can be used as the cathode active material, and an active material capable of occluding and discharging lithium ions can be used as the anode active material. The anode active material is preferably pre-doped with lithium ions in advance. In that case, in view of improvement in energy density, the entire or part of the cathode active material is preferably a composite material of graphene and carbon nanotube.

Each electrode 1 is provided with an effective portion 1a contributing to energy storage and a lead portion 1b to which the terminal 2 is connected, and the above-described active material layer is formed only on the effective portion 1a, and is not formed on the lead portion 1b. The shapes of the effective portion 1a and the lead portion 1b are not particularly limited, and can be set as appropriate in accordance with the specifications of the energy storage device. For example, as depicted in Figure 1, in the case of an energy storage device in a substantially rectangular shape in plan view, in view of decrease in size and energy density, the effective portion 1a may be also formed in a rectangular shape, and the lead portion 1b may be formed so as to protrude from one edge of the current collector.

### [Terminal 2]

As depicted in Figure 1 and Figure 2, the terminal 2 is connected to the lead portion 1b of the electrode 1 by using, for example, an ultrasonic welding method. An aluminum laminate film configuring the exterior body 3 is sealed at a position where a welded portion 4 between the terminal 2 and the lead portion 1b is contained. Therefore, if the width W of the welded portion 4 is large, this inhibits an improvement in the filling factor. Thus, the terminal 2 is preferably welded so that the width W of the welded portion 4 is in a range of 0.15 mm to 0.8 mm in its width direction. With this, while the filling factor and the welding strength are ensured, the size of the charge device can be decreased. Note that the length L of the welded portion 4 can be selected as appropriate in accordance with the width of the terminal 2.

### [Exterior Body 3]

The exterior body 3 is formed of an aluminum laminate film (obtained by laminating a thermoplastic resin film made of polyethylene or the like on an aluminum foil or an aluminum-evaporated film), and has its one side folded and the other three sides sealed by a method such as, for example, heat sealing (heat seal).

Here, to convert a decrease in size of the energy storage device into a numerical form, an index "filling factor" is introduced. Specifically, in plan view, a ratio of an area Se mm² of the effective portion 1a of the electrode 1 with respect to an area So mm² of an upper surface of the exterior body 3 (=(Se/So)×100) is defined as a filling factor (%). In the energy storage device, to enhance energy density of the cell, the value of the filling factor described above is preferably high.

Thus, in the energy storage device 10 of the present embodiment, the ratio of the area Se mm² of the effective portion 1a of the electrode 1 with respect to the area So mm² of the upper surface of the exterior body 3 (Se/So) satisfies Equation 4 below, the area So mm² of the upper surface of the exterior body 3 is set to exceed 60 mm² and be smaller than 170 mm², and the thickness T of the exterior body 3 is set to be equal to or smaller than 3.0 mm. With this, while high energy density is kept, the size of the energy storage device can be decreased.$Se / So ≦ 0.2978 ln So - 1.2088$

### [Manufacturing Method]

Next, a method of manufacturing the organic electrolyte-based energy storage device 10 described above is described. The method of manufacturing the energy storage device 10 of the present embodiment performs at least a step of mutually laminating a plurality of electrodes 1 each including the effective portion 1a contributing to energy storage and the lead portion 1b to which the terminal 2 is connected, a step of connecting the terminal 2 to the plurality of laminated electrodes 1, and a step of sealing, with the exterior body 3 formed of an aluminum laminate film, the laminated electrodes 1 to which the terminal 2 is connected.

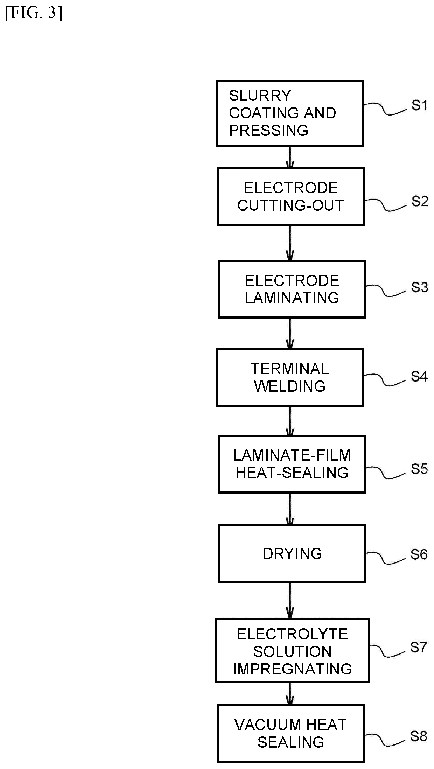

Figure 3 is a flowchart depicting one example of an organic electrolyte-based energy storage device manufacturing method of the present embodiment. More specifically, the energy storage device 10 of the present embodiment can be manufactured by performing, for example, each of steps S1 to S8 depicted in Figure 3.

### [First Step: Slurry Coating and Pressing Step S1]

In a first step, both surfaces of a metal foil functioning as a current collector is coated with slurry containing an active material, and pressing by pressurization is performed. Here, as a metal foil, an aluminum foil or the like can be used. Also, as slurry, one formulated by blending solvents such as a binder and water into an active material can be used.

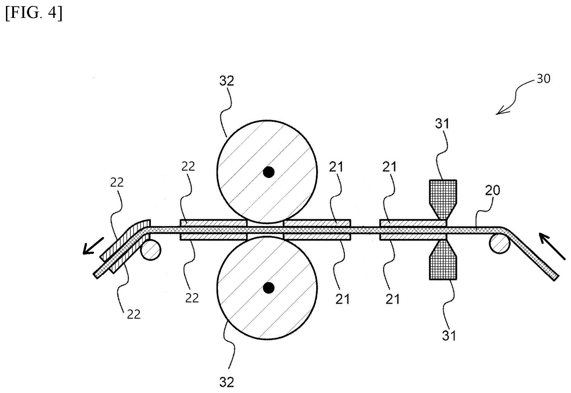

Figure 4 is a diagram schematically depicting a step of coating a metal foil with slurry and pressing. At the first step (slurry coating and pressing step S1) can be performed by, for example, an apparatus 30 including nozzles 31 and press rolls 32 depicted in Figure 4. Specifically, from the nozzles 31 of the coating/pressing apparatus 30, slurry 21 is intermittently discharged, and both surfaces of a metal foil 20 are coated with the slurry 21 with a predetermined width at regular spaces.

Then, after the slurry 21 is dried as required, pressurization is performed by the paired press rolls 32, thereby forming an active material layer 22 on the metal foil 20. Here, the length of an area coated with the slurry 21 can be, for example, 15 mm, and the length of a non-coated area (coating space) can be 10 mm. Also, a misalignment of the active material layer 22 formed on the front surface side and the active material layer 22 formed on the back surface side (alignment accuracy) is preferably equal to or smaller than 0.2 mm.

Note that while an example of coating with the slurry 21 by using the nozzles 31 is depicted in Figure 4, the present invention is not limited to this, and a transfer scheme can be applied in which a pair of rolls is arranged in proximity to each other and slurry for coating one roll is transferred to the other roll. In that case, after one surface of the metal foil is intermittently coated with slurry, that position is detected by a sensor, and timing when the paired rolls are made closer or separated is adjusted, thereby allowing alignment of the front and back surfaces. Also, by adjusting the transfer speed of the metal foil, unevenness of the coating thickness of the slurry can be suppressed, and an active material layer with a uniform thickness can be formed.

### [Second Step: Electrode Cutting-Out Step S2]

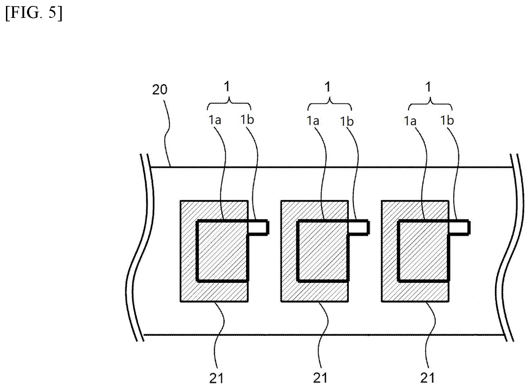

Figure 5 is a diagram schematically depicting a step of cutting out the electrode 1 from the metal foil 20 where the active material layer 22 is formed. At the second step (electrode cutting-out step S2), as depicted in Figure 5, from the metal foil 20, the electrode 1 including the effective portion 1a where the active material layer 22 is formed on the metal foil 20 and the lead portion 1b configured of only the metal foil 20 is cut out. Note that when different active materials are used for the cathode and the anode, the above-described second step is performed for each of the cathode and the anode.

### [Third Step: Electrode Laminating Step S3]

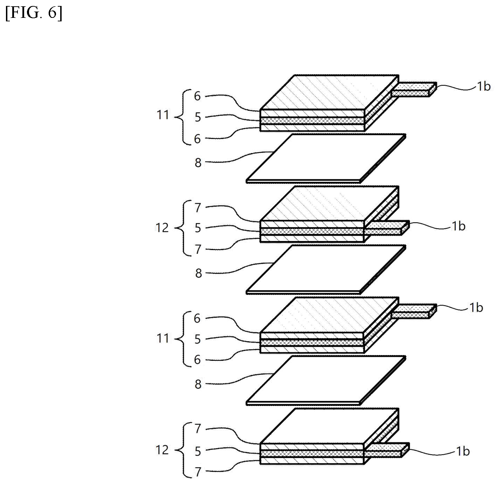

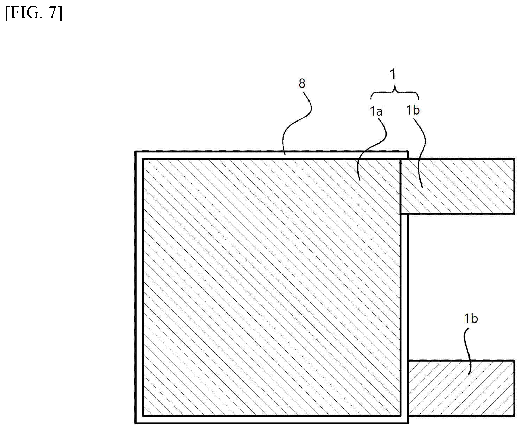

In a third step (electrode laminating step S3), as for the plurality of electrodes 1 cut out in the second step, the electrodes with different polarities are alternately laminated with the positions of the effective portions aligned. The anode and the cathode are alternately laminated. Figure 6 is a diagram schematically depicting a step of laminating electrodes, and Figure 7 is a diagram schematically depicting an alignment method in the step of laminating electrodes.

Specifically, as depicted in Figure 6 and Figure 7, a cathode 11 where a cathode active material layer 6 is formed on each of both sides of the current collector 5 and a anode 12 where an anode active material layer 7 is formed on each of both sides of the current collector 5 are alternately laminated via a separator 8. Here, the position of the lead portion 1b is set to be the same among the electrodes 1 with the same polarity, and the position of the lead position 1b is set to be different among the electrodes 1 with different polarities, thereby arranging the lead portion 1b of the cathode and the lead portion 1b of the anode 12 at positions so that they do not overlap each other. Note that the number of electrodes 1 to be laminated is not particularly limited, and one sheet of cathode 11 and one sheet of anode 12 may be provided, and a plurality of each may be provided.

### [Fourth Step: Terminal Welding Step S4]

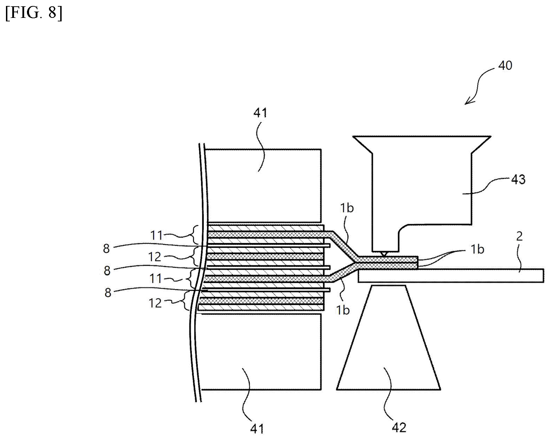

In a fourth step (terminal welding step S4), the terminal 2 is welded to each of the lead portions 1b of the plurality of electrodes 1 laminated in the third step and stacked with the same polarity. Figure 8 is a diagram schematically depicting a step of ultrasonically welding the terminal to the lead portion of the electrode. Welding the terminal 2 can be performed by, for example, an ultrasonic welding apparatus 40 including a retaining portion 41, an anvil 42, and a horn 43 depicted in Figure 8.

When ultrasonic welding is performed by using the ultrasonic welding apparatus 40, firstly, the plurality of electrodes 1 are retained by the retaining portion 41 in a state in which the lead portions 1b are aligned and the terminals 2 are stacked. Next, for example, the lead portion 1b of the cathode 11 is stacked on the terminal 2 mounted on the anvil 42, and is nipped by the anvil 42 and the horn 43 arranged thereabove. Then, a contact portion between the lead portion 1b and the terminal 2 is pressurized by the horn 43, and is welded at relatively low temperature by ultrasonic vibrations applied from a driving source not shown to the horn 43. Note that in the present embodiment, an area to which ultrasonic vibrations are applied is defined as a weld area 44 and is distinguished from the welded portion 4 formed as a result of welding the lead portion 1b and the terminal 2.

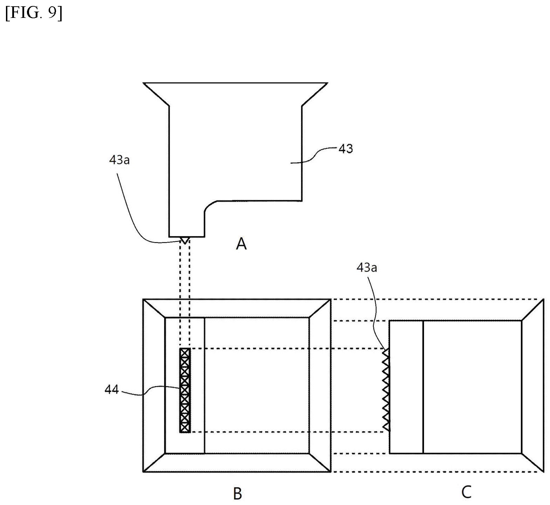

The anvil 42 of the ultrasonic welding apparatus 40 is a frustum-shaped receiving jig, and one having an area of a surface in contact with a welded subject (upper surface) being larger than a welding schedule area. Also, the horn 43 includes a plurality of protrusions in contact with the welded subject. Figure 9 is a diagram schematically depicting an example of structure of the horn 43 of the ultrasonic welding apparatus 40, in which Figure 9A is a front view, Figure 9B is a bottom view, and Figure 9C is a right side view. As depicted in Figure 9A to Figure 9C, the horn 43 is provided with a plurality of protrusions 43a in a flat area wider than the weld area 44. For example, by using the horn 43 with the width of the weld area 44 being 0.2 mm and the length thereof being 1 mm, favorable ultrasonic welding can be achieved.

The horn 43 is provided with a reinforcing portion continuously from the flat area on an opposite side of the retaining portion 41 at a position away from the protrusions 43a. A side surface of the horn 43 on a retaining portion 41 side interferes with the retaining portion 41 and thus stands at an acute angle. When the area of the weld area 44 is decreased, the strength of the horn 43 is not sufficient. Therefore, by providing the reinforcing portion on a side not interfering with the retaining portion 41, the strength can be improved. With this, the width W of a welded portion 4 can be decreased to enhance the filling factor, thereby allowing the size of the energy storage device 10 to be made ultra-compact. Note that the shapes of the anvil 42 and the horn 43 are not limited to those depicted in Figure 8 and Figure 9 and can be changed as appropriate in accordance with the specifications of the energy storage device 10.

Also, while the lead portions 1b of the electrodes 1 are stacked at the same position in the same shape in Figure 8, the present invention is not limited to this, and the lead portions 1b may be arranged so as not to be mutually stacked. With this, since one terminal 2 is connected to one electrode 1, welding strength is improved. Also, even when a welded portion is peeled off due to degradation over time, connection failure does not affect another electrode, and therefore it is possible to prevent the performance of the energy storage device 10, that is, the energy storage capacity, from being abruptly degraded significantly.

### [Fifth Step: Laminate-Film Heat-Sealing Step S5]

In a fifth step (laminate-film heart-sealing step S5), as depicted in Figure 2, the electrode 1 having the terminal 2 connected thereto is placed on a laminate film as the exterior body 3, the laminate film is folded back, and the electrode 1 is covered with the laminate film. In this state, an edge portion of a side orthogonal to the folded-back side of the laminate film is subjected to heat sealing. In the energy storage device 10 depicted in Figure 1, the lower side is the folded-back side, and the right side and the left side are sides subjected to heat sealing in the fifth step. Note that since it is possible to decrease the number of sides subjected to heat sealing by folding back one side, the excess area of the cell can be reduced to improve the filling factor.

The width of heat sealing conventionally requires on the order of 5 mm to 10 mm around the electrode. However, in the energy storage device manufacturing method of the present embodiment, reduction to 2 mm can be made by applying a two-stage heat sealing scheme. Here, the two-stage heat sealing scheme is a fusing scheme formed of a first stage of heat-sealing at low temperatures to fix a fused portion and a second stage of accurately adjusting the fused portion for reinforcing and fusing at high temperatures.

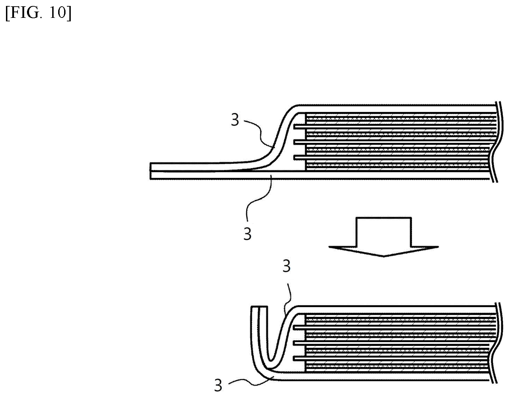

In the energy storage device 10 of the present embodiment, the fused portion of the aluminum laminate film may be further folded inside. Figure 10 is a sectional view schematically depicting a step of folding back the aluminum laminate film after heat sealing. As depicted in Figure 10, by folding the portion subjected to heat sealing, it is possible to reduce the excess area on left and right to enhance the filling factor. Note that while the folded portion of the aluminum laminate film (exterior body 3) and a portion covering the laminated electrodes 1 are separated in the drawing after folding back depicted in Figure 10, it is preferable to perform folding so that these portions are close as much as possible.

### [Sixth Step: Drying Step S6]

In a sixth step (drying step S6), the electrodes 1 contained in the exterior body 3 are dried.

### [Seventh Step: Electrolyte Solution Impregnating Step S7]

In a seventh step (electrolyte solution impregnating step S7), an organic electrolyte solution is injected inside the exterior body 3.

### [Eighth Step: Vacuum Heat Sealing Step S8]

In an eighth step (vacuum heat sealing step S8), with air inside of the exterior body 3 being exhausted to reduce pressure, one opening side is subjected to heat sealing. Here, the electrodes 1 and the welded portion 4 of the terminal 2 are sealed inside the exterior body 3, and a portion other than the welded portion 4 of the terminal 2 is pulled out of the exterior body 3.

As has been described in detail above, in the present embodiment, since the filling factor is increased, the size of the energy storage device can be decreased while a high energy density is kept. As a result, it is possible to achieve an organic electrolyte-based energy storage device with an ultra-small size and a high energy density.

### Embodiments

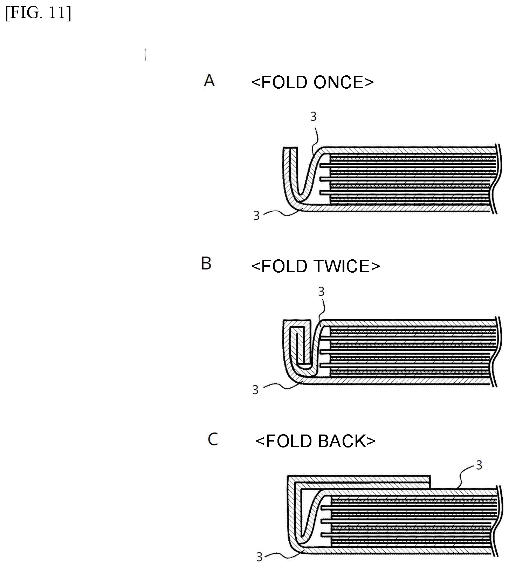

In the following, the effects of the present invention are specifically described by presenting embodiments and comparative examples. In Figure 11, A to C are sectional views depicting a method of processing an end portion of the exterior body in the energy storage device of the embodiments of the present invention, in which Figure 11A depicts folding once, Figure 11B depicts folding twice, and Figure 11C depicts folding back. In the present embodiments, energy storage devices of the embodiments and comparative examples were created with a method and conditions described below to evaluate their electrical characteristics.

### <First Embodiment>

### (1) Fabrication of Electrode for Cathode

87 parts by mass of YP-50 activated carbon powder having a specific surface area of 1600 m²/g and a particle diameter D50=5 µm, 5 parts by mass of acetylene black powder, 4 parts by mass of acrylic binder, 4 parts by mass of carboxymethyl cellulose, and 210 parts by mass of water were blended and mixed well to obtain cathode slurry.

With the cathode slurry formulated with the above-described method, both surfaces of the cathode current collector formed of an aluminum etching foil having a thickness of 22 µm were intermittently coated by using a roll coater. Here, the coating length was 10 mm and the coating space was 10 mm. The resultant product was vacuum-dried to form a cathode active material layer, and an electrode for cathode having a total thickness, that is, a total of the thicknesses of the cathode active material layers on both surfaces and the current collector, of 82 µm was obtained.

### (2) Fabrication of Electrode for Anode

An electrode for anode was fabricated with a method and conditions similar to those of the electrode for cathode described above.

### (3) Fabrication of Cell

From the electrode for cathode, ten sheets of cathode of a size of 6.5 mm×6.2 mm were cut out, and eleven sheets of anode of a size of 6.5 mm×6.2 mm were cut out. These cathodes and anodes were alternately laminated with a separator interposed therebetween, a separator is further stacked at each of the uppermost portion and the lowermost portion of the laminated ones, and four sides were taped, thereby obtaining an electrode-laminated unit. In this electrode-laminated unit, an aluminum-made terminal (a width of 2 mm, a thickness of 0.1 mm) was stacked on the lead portion of the current collector of the cathode and the anode and was subjected to ultrasonic welding. The size of the welded portion was 0.2 mm in width and 1.0 mm in length.

After the resultant product was dried for twelve hours at 120 degrees Celsius, the exterior laminate film was folded back with an end portion of the terminal being pulled out outside, and both side edges of the exterior laminate film were subjected to heat sealing with a sealing width of 2 mm. Then, as an electrolyte solution, EMI-BF4 (1-ethyl-3-methylimidazolium tetrafluoroborate) was injected to the inside of the exterior body for vacuum impregnation of the electrode. Then, the opening upper side was subjected to heat sealing under reduced pressure with a sealing width of 2 mm to vacuum-seal the exterior body. Thereafter, as depicted in Figure 11A, both side edges were folded back once to fabricate an electric double layer capacitor (EDLC) cell with its exterior body size of 12.8 mm long×10.2 mm wide and a thickness of 2.492 mm.

### (4) Filling Factor and Others

The filling factor of the cell of the first embodiment fabricated with the above-described method is calculated as follows.
Area of the upper surface of the exterior body: So(Xo×Yo)=12.8 mm×10.2 mm=130.56 mm²
Area of the effective portion 1a: Se(Xe×Ye)=6.5 mm×6.2 mm=40.3 mm²
Filling factor: Se/So×100=40.3/130.56×100=30.9%

Here, since 0.2978lnSo-1.2088=0.242, the cell of the first embodiment satisfies Equation (I) of claim 1. Also, the area So of the upper surface of the exterior body and the thickness T also satisfy Equations (II) and (III) of claim 1, respectively, and the cell of the first embodiment satisfied the requirements defined in claim 1.

### (5) Electrical Characteristics of Cell

The electrochemical characteristics of the cell were measured by using a multichannel potentiostat/galvanostat (VMP-300 manufactured by BioLogic Science Instruments). Specifically, the constant current per unit mass of an electrode film active material was set at 0.2 A/g, and charging was performed until the cell voltage became 2.7 V. Next, the constant current per unit mass of an electrode film active material was set at 0.2 A/g, and discharging was performed until the cell voltage became 2.7 V. Then, from a discharge curve between the voltage Vmax at the start of discharge and the voltage 0 V at the end of discharge, the initial electrostatic capacity was found.

Thereafter, for durability evaluation, a voltage of 2.7 V was applied to the cell under a temperature condition of 65 degrees Celsius, the electrostatic capacity after the period of 2000 hours was found by a simulation, and the electrostatic capacity retention rate was calculated. As a result, favorable results were obtained as follows. For the initial electrostatic capacity of 0.57 F, the electrostatic capacity after the period of 2000 hours was 0.55 F, and the capacity retention rate was 97.1%.

### <Second Embodiment>

An electric double layer capacitor (EDLC) cell was fabricated with a method and conditions similar to those of the first embodiment described above, except that the sealing width on the left and right side edges of the exterior laminate film was set at 1.5 mm. In the cell of the second embodiment, all of the area So of the upper surface of the exterior body, the area Se of the effective portion 1a, and the thickness T of the exterior body were equal to those of the first embodiment, and the requirements defined in claim 1 were satisfied. Also, the filling factor was equal to that of the first embodiment, 30.9%.

Furthermore, as for the cell of the second embodiment, when its electrical characteristics were measured with a method similar to that of the first embodiment, for the initial electrostatic capacity of 0.57 F, the electrostatic capacity after the period of 2000 hours was 0.54 F, and the capacity retention rate was 94.7%. Also from this cell of the second embodiment, favorable results were obtained, although the capacity retention rate slightly decreased compared with the cell of the first embodiment.

### <Third Embodiment>

An electric double layer capacitor (EDLC) cell was fabricated with a method and conditions similar to those of the first embodiment described above, except that the sealing width on the left and right side edges of the exterior laminate film was set at 3.0 mm and folding at the left and right side edges was performed twice as depicted in Figure 11B. In the cell of the third embodiment, while the area Se of the effective portion 1a and the thickness T of the exterior body were equal to those of the first embodiment, the area So of the upper surface of the exterior body was increased to 135.68 mm² (12.8 mm×10.6 mm). Thus, the filling factor was slightly decreased to 29.7% compared with the cell of the first embodiment.

Also, since 0.2978lnSo-1.2088=0.253, the cell of the third embodiment also satisfies Equation (I) of claim 1. Furthermore, since the area So of the upper surface of the exterior body and the thickness T also satisfy Equations (II) and (III) of claim 1, respectively, the cell of the third embodiment satisfied the requirements defined in claim 1.

Next, when the electrical characteristics of the cell of the third embodiment were measured with a method and conditions similar to those of the first embodiment, for the initial electrostatic capacity of 0.57 F, the electrostatic capacity after the period of 2000 hours was 0.56 F, and the capacity retention rate was 98.2%. As a result, in the cell of the third embodiment, the capacity retention rate was improved compared with the cell of the first embodiment, and thus favorable results were obtained.

### <Fourth Embodiment>

An electric double layer capacitor (EDLC) cell was fabricated with a method and conditions similar to those of the first embodiment described above, except that the sealing width on the left and right side edges of the exterior laminate film was set at 5.0 mm and the left and right side edges were folded to the upper surface of the exterior body as depicted in Figure 11C. In the cell of the fourth embodiment, while the thickness T of the exterior body was increased to 2.71 mm, the area So of the upper surface of the exterior body and the area of the effective portion 1a were equal to those of the first embodiment, and the filling factor was also equal to that of the cell of the first embodiment, 30.9%. Therefore, the cell of the fourth embodiment satisfied the requirements defined in claim 1 were satisfied as to all of the area So of the upper surface of the exterior body, the area Se of the effective portion 1a, and the thickness T of the exterior body.

Next, when the electrical characteristics of the cell of the fourth embodiment were measured with a method and conditions similar to those of the first embodiment, for the initial electrostatic capacity of 0.57 F, the electrostatic capacity after the period of 2000 hours was 0.566 F, and the capacity retention rate was 99.3%. As a result, in the cell of the fourth embodiment, the capacity retention rate was improved compared with the cell of the first embodiment, and thus favorable results were obtained.

### <Fifth Embodiment>

As a fifth embodiment, a laminate-type capacitor cell was fabricated by using a cathode and anode manufactured with changing the active material from activated carbon powder to a carbon-nanotube/graphene composite material (CNT/G).

### (1) Fabrication of Cathode and Anode

The fabrication method and the fabrication conditions of the cathode and the anode are the same as those of the first embodiment described above, except that the active material is changed. Also, a total thickness of the active material layers on both surfaces and the current collector, that is, a total thickness of the electrode, was 92 µm.

### (2) Fabrication of Cell

A cell was fabricated with a method and conditions similar to those of the first embodiment described above, except that eleven sheets of cathode and twelve sheets of anode are provided. In the cell of the fifth embodiment, while the thickness T of the exterior body was increased to 2.94 mm, the area So of the upper surface of the exterior body and the area of the effective portion 1a were equal to those of the cell of the first embodiment, and the filling factor was also equal to that of the cell of the first embodiment, 30.9%. Therefore, the cell of the fifth embodiment satisfied the requirements defined in claim 1 as to all of the area So of the upper surface of the exterior body, the area Se of the effective portion 1a, and the thickness T of the exterior body.

### (3) Electrical Characteristics of Cell

Next, when the electrical characteristics of the cell of the fifth embodiment were measured with a method and conditions similar to those of the first embodiment, for the initial electrostatic capacity of 1.63 F, the electrostatic capacity after the period of 2000 hours was 1.59 F, and the capacity retention rate was 97.7%. As a result, in the cell of the fifth embodiment, the electrostatic capacity increased more than three fold compared with the cells of the first to fourth embodiments in which activated carbon powder was taken as a material of an active material, and the capacity retention rate was also equivalent to or better, and thus favorable results were obtained.

### <Sixth Embodiment>

A laminate-type capacitor cell was fabricated with a method and conditions similar to those of the fifth embodiment described above, except that seven sheets of cathode and eight sheets of anode are provided. In the cell of this sixth embodiment, while the thickness T of the exterior body became thinner to 2.00 mm compared with the cell of the fifth embodiment, the area So of the upper surface of the exterior body and the area of the effective portion 1a were equal to those of the cell of the fifth embodiment, and the filling factor was also equal thereto, 30.9%. Therefore, the cell of the sixth embodiment satisfied the requirements defined in claim 1 as to all of the area So of the upper surface of the exterior body, the area Se of the effective portion 1a, and the thickness T of the exterior body.

Next, when the electrical characteristics of the cell of the sixth embodiment were measured with a method and conditions similar to those of the first embodiment, for the initial electrostatic capacity of 1.04 F, the electrostatic capacity after the period of 2000 hours was 1.01 F, and the capacity retention rate was 97.4%. As a result, in the cell of the sixth embodiment, the filling factor was equivalent, and thus favorable results were obtained, although the capacity retention rate slightly decreased compared with the cell of the fifth embodiment.

### <Seventh Embodiment>

A laminate-type capacitor cell was fabricated with a method and conditions similar to those of the fifth embodiment described above, except that three sheets of cathode and four sheets of anode are provided and folding at the left and right side edges of the exterior laminate film is performed twice as depicted in Figure 11B. In the cell of this seventh embodiment, while the thickness T of the exterior body became thinner to 2.00 mm compared with the cell of the fifth embodiment, the area So of the upper surface of the exterior body and the area of the effective portion 1a were equal to those of the cell of the fifth embodiment, and the filling factor was also equal thereto, 30.9%. Therefore, the cell of the seventh embodiment satisfied the requirements defined in claim 1 as to all of the area So of the upper surface of the exterior body, the area Se of the effective portion 1a, and the thickness T of the exterior body.

In the cell of the seventh embodiment, while the thickness T of the exterior body was 1.06 mm, which is thinner than the cells of the fifth embodiment and the sixth embodiment, the area So of the upper surface of the exterior body was increased to 135.68 mm² (=12.8 mm×10.6 mm), and therefore the filling factor was slightly decreased to 29.7% compared with the cells of the fifth embodiment and the sixth embodiment. Also, since 0.2978lnSo-1.2088=0.253, the cell of the seventh embodiment also satisfies Equation (I) of claim 1. Furthermore, since the area So of the upper surface of the exterior body and the thickness T also satisfy Equations (II) and (III) of claim 1, respectively, the cell of the seventh embodiment satisfied the requirements defined in claim 1.

In addition, when the electrical characteristics of the cell of the seventh embodiment were measured with a method and conditions similar to those of the fifth embodiment, for the initial electrostatic capacity of 0.45 F, the electrostatic capacity after the period of 2000 hours was 0.44 F, and the capacity retention rate was 98.1%. As a result, in the cell of the seventh embodiment, the capacity retention rate increased compared with the cells of the fifth and sixth embodiments, and thus favorable results were obtained.

### <Eighth Embodiment>

A cell of an eighth embodiment was fabricated with a method and conditions similar to those of the cell of the sixth embodiment, except that the thickness of the active material layer was increased and the thickness (total thickness) of each of the cathode and the anode per sheet was 154 µm. In the cell of the eighth embodiment, while the thickness T of the exterior body was 2.93 mm, which is thicker than that of the cell of the sixth embodiment, the area So of the upper surface of the exterior body and the area Se of the effective portion 1a were equal to those of the cell of the sixth embodiment, and the filling factor was also equal thereto, 30.9%. Therefore, the cell of the eighth embodiment satisfied the requirements defined in claim 1 as to all of the area So of the upper surface of the exterior body, the area Se of the effective portion 1a, and the thickness T of the exterior body.

Next, when the electrical characteristics of the cell of the eighth embodiment were measured with a method and conditions similar to those of the fifth embodiment, for the initial electrostatic capacity of 1.96 F, the electrostatic capacity after the period of 2000 hours was 1.92 F, and the capacity retention rate was 97.9%. As a result, in the cell of the eighth embodiment, the capacity retention rate slightly increased compared with the cell of the sixth embodiment, and thus favorable results were obtained.

### <Ninth Embodiment>

As a ninth embodiment, a laminate-type lithium ion capacitor cell was fabricated with the following method.

### (1) Electrode for Cathode

To 87 parts by mass of CNT/graphene (carbon nanotube/graphene), 5 parts by mass of acetylene black powder, 4 parts by mass of acrylic binder, 4 parts by mass of carboxymethyl cellulose, and 210 parts by mass of water were blended and mixed well to obtain cathode slurry.

With the cathode slurry formulated with the above-described method, both surfaces of the cathode current collector formed of an aluminum perforated foil having a thickness of 31 µm were intermittently coated by using a roll coater. The resultant product was vacuum-dried to form a cathode active material layer, and an electrode for cathode having a total thickness, that is, a total of the thicknesses of the cathode active material layers on both surfaces and the current collector, of 195 µm was obtained.

From this electrode for cathode, an electrode piece of 30 mm×30 mm was cut out and taken as an evaluation electrode. Then, firstly, a terminal was subjected to ultrasonic fusing to each of two evaluation electrodes, and the two were arranged to be opposed to each other with a cellulose-made separator having a thickness of 25 µm interposed therebetween and were accommodated in the exterior body. Thereafter, an electrolyte solution was injected inside the exterior body. With an end of the electrode terminal being pulled out outside the exterior body, the exterior body was sealed by heat sealing, thereby obtaining an evaluation cell. Here, the exterior body was configured of a laminate film with polypropylene, aluminum, and nylon laminated. As the electrolyte solution, a solution was used in which LiPF₆ was dissolved into a mixed solution obtained by mixing ethylene carbonate and diethyl carbonate at a volume ratio of 1:1 so that the concentration of LiPF₆ was 1 mol/L.

The electrostatic capacity per unit mass of the evaluation cell manufactured with the above-described method was measured in a potential range of 0 V to 2.7 V at room temperatures. An electrostatic capacity C per unit mass is calculated by Equation 5 below. In Equation 5 below, I is a constant current, m is a total mass of two electrodes, and ΔV/Δt is a gradient obtained by linear fitting of a discharge curve between the voltage Vmax at the start of discharge and 1/2 Vmax. As a result, the electrostatic capacity per unit mass of the cathode evaluation electrode was 150 F/g.$C = 4 \times I \times \frac{Δ t}{m \times Δ V}$

### (2) Electrode for Anode

88 parts by mass of the electrode material BELLFINE (registered trademark) LN-0001 powder (specific surface area<30 m²/g, particle diameter D50=1.5±0.5 µm) manufactured by AT ELECTRODE, 5 parts by mass of acetylene black powder, 3 parts by mass of SBR (styrene butadiene rubber) binder, 4 parts by mass of carboxymethyl cellulose, and 210 parts by mass of water were blended and mixed well to obtain anode slurry.

With the anode slurry formulated with the above-described method, both surfaces of the anode current collector formed of a copper foil having a thickness of 21 µm were intermittently coated by using a roll coater. The resultant product was vacuum-dried to form an anode active material layer, and an electrode for anode having a total thickness, that is, a total of the thicknesses of the anode active material layers on both surfaces and the current collector, of 66 µm was obtained.

From this electrode for anode, an electrode piece of 30 mm×30 mm was cut out and taken as an evaluation electrode. Then, as a counter electrode of this evaluation electrode, a lithium metal having 30 mm×30 mm×100 µm in thickness was taken as a reference electrode, a polypropylene-made fine porous membrane having a thickness of 50 µm was taken as a separator, and the two electrodes were arranged to be opposed to each other to be accommodated in the exterior body. Thereafter, an electrolyte solution was injected to the inside of the exterior body and, with an end portion of the electrode terminal being pulled out outside the exterior body, the exterior body was sealed by heat sealing, thereby obtaining an evaluation cell. Here, as the electrolyte solution, a solution was used in which LiPF₆ was dissolved into a mixed solution obtained by mixing ethylene carbonate and diethyl carbonate at a volume ratio of 1:1 so that the concentration of LiPF₆ was 1 mol/L.

The electrostatic capacity per unit mass of the evaluation cell manufactured with the above-described method was measured in a potential range of 0 V to 2.7 V at room temperatures. In the measurement, the charge current density was set at 50 mA/g, lithium ions of 500 mAh/g were charged to the mass of the anode active material, and then discharge was performed at 50 mA/G to 3 V. As a result, from a discharge time for the potential of the anode to change by 0.2 V from the potential one minute after the start of discharge, the electrostatic capacity per unit mass of the cathode was found to be 4000 F/g.

### [Fabrication of Cell]

From the electrode for cathode, eight sheets of cathode of a size of 6.5 mm×6.2 mm were cut out, and nine sheets of anode of a size of 6.5 mm×6.2 mm were cut out. These cathodes and anodes were alternately laminated with a separator interposed therebetween and were dried for twelve hours at 120 degrees Celsius. Then a separator is further stacked at each of the uppermost portion and the lowermost portion of the laminated ones and four sides were taped. One sheet of one obtained by press-fitting a lithium metal foil for pre-doping onto a copper lath was arranged at the outermost portion so as to be opposed to the cathode, thereby obtaining an electrode-laminated unit.

In this electrode-laminated unit, an aluminum-made terminal (width of 2 mm) was stacked on the lead portion (width of 2 mm) of the cathode current collector and a nickel-made terminal (width of 2 mm) was stacked on the lead portion (width of 2 mm) of the anode current collector, and they were subjected to ultrasonic welding. The size of the welded portion was 0.2 mm in width and 1.0 mm in length.

Next, with an end portion of the terminal being pulled out outside, the exterior laminate film was folded back, and both side edges of the exterior laminate film were subjected to heat sealing with a sealing width of 2 mm. Thereafter, as an electrolyte solution, a solution was injected to the inside of the exterior body for vacuum impregnation of the electrode, wherein the solution had been obtained by dissolving LiPF₆ into a mixed solution obtained by mixing ethylene carbonate and diethyl carbonate at a volume ratio of 1:1 so that the concentration of LiPF₆ was 1 mol/L. Then, the opening upper side was subjected to heat sealing under reduced pressure with a sealing width of 2 mm to vacuum-seal the exterior body. Thereafter, as depicted in Figure 11A, both side edges were folded back once to fabricate a lithium ion capacitor (LIC) cell with its exterior body size of 12.8 mm long×10.2 mm wide and a thickness of 2.492 mm.

### (4) Filling Factor and Others

The filling factor of the cell of the ninth embodiment fabricated with the above-described method is calculated as follows.
Area of the upper surface of the exterior body: So(Xo×Yo)=12.8 mm×10.2 mm=130.56 mm²
Area of the effective portion 1a: Se(Xe×Ye)=6.5 mm×6.2 mm=40.3 mm²
Filling factor: Se/So×100=40.3/130.56×100=30.9%

Here, since 0.2978lnSo-1.2088=0.242, the cell of the ninth embodiment satisfies Equation (I) of claim 1. Also, the area So of the upper surface of the exterior body and the thickness T also satisfied Equations (II) and (III) of claim 1, respectively, and the cell of the ninth embodiment satisfied the requirements defined in claim 1.

### (5) Electrical Characteristics of Cell

When the cell of the ninth embodiment was left for fourteen days, the cell voltage became equal to or higher than 2.7 V, and it was thus determined that preliminary charging of the lithium ions was completed. Thereafter, charging was performed until the cell voltage became 3.8 V with a constant current of 10 mA, and discharging is performed until the cell voltage became 2.2 V with a constant current of 10 mA. From this 3.8 V-2.2 V cycle, an initial electrostatic capacity was found. Next, for durability evaluation, the electrostatic capacity after the period of 2000 hours and the electrostatic capacity retention rate were found by a simulation. As a result, favorable results were obtained as follows. For the initial electrostatic capacity of 4.47 F, the electrostatic capacity after the period of 2000 hours was 4.45 F, and the capacity retention rate was 99.6%.

### <Tenth Embodiment>

As a tenth embodiment, a laminate-type capacitor cell was fabricated by using a cathode manufactured with changing the active material from the carbon-nanotube/graphene composite material (CNT/G) to activated carbon powder.

### (1) Fabrication of Cathode and Anode

The fabrication method and the fabrication conditions of the cathode and the anode are the same as those of the ninth embodiment described above, except that the cathode active material is changed to YP-50 activated carbon powder having a specific surface area of 1600 m²/g and a particle diameter D₅₀=5 µm. Also, in the cathode, a total thickness of the active material layers on both surfaces and the current collector, that is, a total thickness of the electrode, was 201 µm. Also, when electrostatic capacity per unit mass of the cathode calculated with a method similar to that of the ninth embodiment was 100 F/g. Note that since the anode of the tenth embodiment is identical to that of the ninth embodiment including the active material, the electrostatic capacity per unit mass is also equal thereto, 4000 F/g.

### (2) Fabrication of Cell

A cell was fabricated with a method and conditions similar to those of the ninth embodiment described above. In the cell of the tenth embodiment, while the thickness T of the exterior body was slightly increased to 2.87 mm, the area So of the upper surface of the exterior body and the area of the effective portion 1a were equal to those of the cell of the first embodiment, and the filling factor was also equal to that of the cell of the first embodiment, 30.9%. Therefore, the cell of the tenth embodiment satisfied the requirements defined in claim 1 as to all of the area So of the upper surface of the exterior body, the area Se of the effective portion 1a, and the thickness T of the exterior body.

### (3) Electrical Characteristics of Cell

When the electrical characteristics of the cell were measured with a method similar to that of the ninth embodiment, favorable results were obtained as follows. For the initial electrostatic capacity of 2.08 F, the electrostatic capacity after the period of 2000 hours was 2.06 F, and the capacity retention rate was 99.3%.

### <First Comparative Example>

As a first comparative example, as with the first to fourth embodiments, an electric double layer capacitor (EDLC) using activated carbon as an active material was fabricated. In the first comparative example, a cell was fabricated with a method and conditions similar to those of the first embodiment and its electrical characteristics were measured, except that the electrode size of the cathode and the anode was changed to 5.2 mm×6.2 mm and the size of the welded portion was changed to have a width of 1 mm and a length of 1 mm.

The filling factor of the cell of the first comparative example is calculated as follows.
Area of the upper surface of the exterior body: So(Xo×Yo)=12.8 mm×10.2 mm=130.56 mm²
Area of the effective portion 1a: Se(Xe×Ye)=5.2 mm×6.2 mm=32.2 mm²
Filling factor: Se/So×100=32.2/130.56×100=24.7%

Here, since 0.2978lnSo-1.2088=0.242, the cell of the first comparative example satisfies Equation (I) of claim 1. Also, the area So of the upper surface of the exterior body and the thickness T also satisfy Equation (II) and Equation (III) of claim 1, respectively. However, in the cell of the first comparative example, since the width of the welded portion is 1 mm, the cell was out of the scope of the present invention.

As for the cell of this first comparative example, when its electrical characteristics were measured with a method similar to that of the ninth embodiment, for the initial electrostatic capacity of 0.48 F, the electrostatic capacity after the period of 2000 hours was 0.46 F, and the capacity retention rate was 97.4%. In this manner, in the cell of the first comparative example, while the capacity retention rate was favorable, the filling factor was low.

### <Second Comparative Example>

An electric double layer capacitor (EDLC) of a second comparative example was fabricated with a method and conditions similar to those of the first embodiment, except that the sealing portion on the left and right side edges of the exterior body is not folded.

In the cell of the second comparative example, the width Yo of the upper surface of the exterior body increases by an amount of the sealing portion unfolded, and the value of the area So of the upper surface of the exterior body is changed. Therefore, the filling factor is calculated as follows.
Area of the upper surface of the exterior body: So(Xo×Yo)=12.8 mm×13.8 mm=176.64 mm²
Area of the effective portion 1a: Se(Xe×Ye)=6.5 mm×6.2 mm=40.3 mm²
Filling factor: Se/So×100=40.3/176.64×100=22.8%

Here, since 0.2978lnSo-1.2088=0.332, the cell of the second comparative example did not satisfy Equation (I) of claim 1.

As for the cell of this second comparative example, when its electrical characteristics were measured with a method similar to that of the ninth embodiment, for the initial electrostatic capacity of 0.57 F, the electrostatic capacity after the period of 2000 hours was 0.55 F, and the capacity retention rate was 96.8%. In this manner, in the cell of the second comparative example, while the capacity retention rate was favorable, the filling factor was low.

### <Third Comparative Example>

An electric double layer capacitor (EDLC) of a third comparative example was fabricated with a method and conditions similar to those of the first embodiment described above, except that the size of the welded portion was set to have a width of 0.1 mm and a length of 1 mm. In the cell of this third comparative example, since the width of the welded portion is narrower than the scope of the present invention, the welded portion was acknowledged to lack strength, and the electrical characteristics were not able to be measured.

In the first embodiment, the resistance value in the thickness direction of the aluminum foil having a thickness of 0.1 mm used as a terminal was measured as 13 mΩ, and the resistance value in the thickness direction when the terminal is superposed on a terminal welded portion (a width of 2 mm) of the current collector to make a size of the welded portion as having a width of 0.2 mm and a length of 1.0 mm for ultrasonic welding was 14 mΩ. From this difference, the resistance value of the welded portion in the thickness direction is estimated as approximately 1 mΩ. On the other hand, in the third comparative example, since the size of the welded portion is reduced to have a width of 0.1 mm and a length of 1 mm, the resistance value in the thickness direction exceeds 1 Ω, and it is considered that welding failure has occurred.

### <Reference Example>

An electric double layer capacitor (EDLC) of a reference example was fabricated with a method and conditions similar to those of the first embodiment described above, except that the sealing width of the left and right side edges of the exterior body were set at 1 mm.

Since narrowing the sealing width does not affect the area So of the upper surface of the exterior body, the filling factor of the cell of the reference example has a value equal to that of the first embodiment.
Filling factor: Se/So×100=40.3/176.64×100=30.9%

Here, since 0.2978lnSo-1.2088=0.242, the cell of the reference example satisfies Equation (I) of claim 1. Also, the area So of the upper surface of the exterior body and the thickness T also satisfy Equation (II) and Equation (III) of claim 1, respectively.

As for the cell of this reference example, when its electrical characteristics were measured with a method similar to that of the ninth embodiment, for the initial electrostatic capacity of 0.57 F, the electrostatic capacity after the period of 2000 hours was 0.12 F, and the capacity retention rate was 31.2%. From these results, it has been confirmed that, in the cell of the reference example, while the filling factor was high, the capacity retention rate was low and a sealing width of 1.0 mm was not sufficient.

The above results are depicted in the following Table 1 and Table 2.

**[Table 1]**

| | TYPE OF ENERGY STORAGE DEVICE | ELECTRODE | | | | | | | WELDED PORTION | | SEALING | | | EXTERIOR | | | |
|---|---|---|---|---|---|---|---|---|---|---|---|---|---|---|---|---|---|
| | | ACTIVE MATERIAL | Xe (mm) | Ye (mm) | Se (mm²) | THICKNESS [CATHODE /ANODE] (µm) | NUMBER OF CATHODE SHEETS | NUMBER OF ANODE SHEETS | WIDTH (mm) | STRENGTH | SEALING WIDTH (mm) | | FOLDING | Xo (mm) | Yo (mm) | So (mm²) | THICK -NESS (mm) |
| | | | | | | | | | | | SIDE EDGE | UPPER EDGE | | | | | |
| FIRST EMBODIMENT | EDLC | ACTIVATED CARBON POWDER | 6.5 | 6.2 | 40.3 | 82/82 | 10 | 11 | 0.2 | OK | 2.0 | 2.0 | ONCE | 12.8 | 10.2 | 130.6 | 2.49 |
| SECOND EMBODIMENT | EDLC | ACTIVATED CARBON POWDER | 6.5 | 6.2 | 40.3 | 82/82 | 10 | 11 | 0.2 | OK | 1.5 | 2.0 | ONCE | 12.8 | 10.2 | 130.6 | 2.49 |
| THIRD EMBODIMENT | EDLC | ACTIVATED CARBON POWDER | 6.5 | 6.2 | 40.3 | 82/82 | 10 | 11 | 0.2 | OK | 3.0 | 2.0 | TWICE | 12.8 | 10.6 | 135.7 | 2.49 |
| FOURTH EMBODIMENT | EDLC | ACTIVATED CARBON POWDER | 6.5 | 6.2 | 40.3 | 82/82 | 10 | 11 | 0.2 | OK | 5.0 | 2.0 | FOLDING BACK | 12.8 | 10.2 | 130.6 | 2.71 |
| FIFTH EMBODIMENT | EDLC | CNT/G | 6.5 | 6.2 | 40.3 | 92/92 | 11 | 12 | 0.2 | OK | 2.0 | 2.0 | ONCE | 12.8 | 10.2 | 130.6 | 2.94 |
| SIXTH EMBODIMENT | EDLC | CNT/G | 6.5 | 6.2 | 40.3 | 92/92 | 7 | 8 | 0.2 | OK | 2.0 | 2.0 | ONCE | 12.8 | 10.2 | 130.6 | 2.00 |
| SEVENTH EMBODIMENT | EDLC | CNT/G | 6.5 | 6.2 | 40.3 | 92/92 | 3 | 4 | 0.2 | OK | 2.0 | 2.0 | TWICE | 12.8 | 10.6 | 135.7 | 1.06 |
| EIGHTH EMBODIMENT | EDLC | CNT/G | 6.5 | 6.2 | 40.3 | 154/154 | 7 | 8 | 0.2 | OK | 2.0 | 2.0 | ONCE | 12.8 | 10.2 | 130.6 | 2.93 |
| NINTH EMBODIMENT | LIC | CNT/G | 6.5 | 6.2 | 40.3 | 195/66 | 8 | 9 | 0.2 | OK | 2.0 | 2.0 | ONCE | 12.8 | 10.2 | 130.6 | 2.82 |
| TENTH EMBODIMENT | LIC | ACTIVATED CARBON POWDER | 6.5 | 6.2 | 40.3 | 201/66 | 8 | 9 | 0.2 | OK | 2.0 | 2.0 | ONCE | 12.8 | 10.2 | 130.6 | 2.87 |
| FIRST COMPARATIV E EXAMPLE | EDLC | ACTIVATED CARBON POWDER | 5.2 | 6.2 | 32.2 | 82/82 | 10 | 11 | 1.0 | OK | 2.0 | 2.0 | ONCE | 12.8 | 10.2 | 130.6 | 2.49 |
| SECOND COMPARATIV E EXAMPLE | EDLC | ACTIVATED CARBON POWDER | 6.5 | 6.2 | 40.3 | 82/82 | 10 | 11 | 0.2 | OK | 2.0 | 2.0 | NONE | 12.8 | 13.8 | 176.6 | 2.49 |
| THIRD COMPARATIV E EXAMPLE | EDLC | ACTIVATED CARBON POWDER | 6.5 | 6.2 | 40.3 | 82/82 | 10 | 11 | 0.1 | NG | 2.0 | 2.0 | ONCE | 12.8 | 10.2 | 130.6 | 2.49 |
| REFERENCE EXAMPLE | EDLC | ACTIVATED CARBON POWDER | 6.5 | 6.2 | 40.3 | 82/82 | 10 | 11 | 0.2 | OK | 1.0 | 2.0 | ONCE | 12.8 | 10.2 | 130.6 | 2.49 |

**[Table 2]**

| | FILLING FACTOR (%) | CAPACITY RETENTION RATE (%) |
|---|---|---|
| FIRST EMBODIMENT | 30.9 | 97.1 |
| SECOND EMBODIMENT | 30.9 | 94.7 |
| THIRD EMBODIMENT | 29.7 | 98.2 |
| FOURTH EMBODIMENT | 30.9 | 99.3 |
| FIFTH EMBODIMENT | 30.9 | 97.7 |
| SIXTH EMBODIMENT | 30.9 | 97.4 |
| SEVENTH EMBODIMENT | 29.7 | 98.1 |
| EIGHTH EMBODIMENT | 30.9 | 97.9 |
| NINTH EMBODIMENT | 30.9 | 99.6 |
| TENTH EMBODIMENT | 30.9 | 99.3 |
| FIRST COMPARATIVE EXAMPLE | 24.7 | 97.4 |
| SECOND COMPARATIVE EXAMPLE | 22.8 | 96.8 |
| THIRD COMPARATIVE EXAMPLE | 30.9 | N/A |
| REFERENCE EXAMPLE | 30.9 | 31.2 |

From the results above, it has been confirmed that, according to the present embodiment, an organic electrolyte-based energy storage device in an ultra-small size but with high energy density can be achieved.

### Reference Signs List

- 1: electrode
- 1a: effective portion
- 1b: lead portion
- 2: terminal
- 3: exterior body
- 4: welded portion
- 5: current collector
- 6: cathode active material layer
- 7: anode active material layer
- 8: separator
- 10: energy storage device
- 11: cathode
- 12: anode
- 20: metal foil
- 21: slurry
- 22: active material layer
- 30: coating/pressing apparatus
- 31: nozzle
- 32: press roll
- 40: ultrasonic welding apparatus
- 41: retaining portion
- 42: anvil
- 43: horn
- 44: weld area

## Claims

1. An organic electrolyte-based energy storage device comprising:
a plurality of electrodes mutually laminated;
a plurality of terminals each electrically connected to each of the plurality of electrodes; and
an exterior body formed of an aluminum laminate film, wherein
the electrodes are each provided with an effective portion contributing to energy storage and a lead portion to which the terminal is connected, the lead portion and the terminal are welded in a width direction of the terminal, and a welded portion has a width of 0.15 mm to 0.8 mm, and
in plan view, when an area of an upper surface of the exterior body is So mm², an area of the effective portion of the electrode is Se mm², and a thickness of the exterior body is T mm, Equations (I) to (III) below are satisfied: $Se / So ≦ 0.2978 ln So - 1.2088$ $60 < So < 170$ $T ≦ 3.0$

2. The organic electrolyte-based energy storage device according to claim 1, wherein
the plurality of electrodes are formed of a cathode where the effective portion is coated with a cathode active material and a anode where the effective portion is coated with an anode active material, and
the cathode active material and the anode active material are an active material capable of absorbing and desorbing ions.

3. The organic electrolyte-based energy storage device according to claim 2, wherein
the cathode active material and the anode active material include a composite material of graphene and carbon nanotube.

4. The organic electrolyte-based energy storage device according to claim 1, wherein
the plurality of electrodes are formed of a cathode where the effective portion is coated with a cathode active material and a anode where the effective portion is coated with an anode active material,
the cathode active material is an active material capable of absorbing and desorbing ions, and
the anode active material is an active material capable of occluding and discharging lithium ions and is pre-doped with lithium ions in advance.

5. The organic electrolyte-based energy storage device according to claim 4, wherein
the cathode active material includes a composite material of graphene and carbon nanotube.

6. An organic electrolyte-based energy storage device manufacturing method comprising:
a step of mutually laminating a plurality of electrodes each including an effective portion contributing to energy storage and a lead portion to which a terminal is connected;
a step of connecting the terminal to the plurality of electrodes; and
a step of sealing, with an exterior body formed of an aluminum laminate film, the laminated electrodes to which the terminal is connected, wherein
in the step of connecting the terminal to the plurality of electrodes, welding is performed in a width direction of the terminal so that a welded portion has a width of 0.15 mm to 0.8 mm, and
an energy storage device satisfying Equations (I) to (III) below is obtained when, in plan view, an area of an upper surface of the exterior body is So mm², an area of the effective portion of the electrode is Se mm², and a thickness of the exterior body is T mm: $Se / So ≦ 0.2978 ln So - 1.2088$ $60 < So < 170$ $T ≦ 3.0$

7. The organic electrolyte-based energy storage device manufacturing method according to claim 6, wherein
the step of connecting the terminal to the plurality of electrodes uses an ultrasonic welding apparatus including a retaining portion that retains a weld target, an anvil, and a horn to ultrasonically weld the electrodes and the terminal together.
